# EUROPÄISCHE PATENTSCHRIFT

(11) **EP 2 660 996 B1**
(45) Veröffentlichungstag und Bekanntmachung des Hinweises auf die Patenterteilung: **09.07.2014**
(21) Anmeldenummer: 13178403.5
(22) Anmeldetag: 17.05.2011
(51) Int. Cl.: H04B 7/185

(54) **Anordnung und Verfahren zum Test einer Satellitenkommunikationsverbindung**
Assembly and device for testing a satellite communication connection
Agencement et procédé de test d'une liaison de communication satellite

(30) Priorität: 17.05.2010 DE 102010029016; 01.04.2011 DE 102011006618
(43) Veröffentlichungstag der Anmeldung: 06.11.2013
(62) Teilanmeldung aus: 11721752.1
(73) Patentinhaber: INRADIOS integrated radio solutions GmbH, 01187 Dresden (DE)
(72) Erfinder: Bittner, Steffen, 01217 Dresden (DE); Krondorf, Marco, 01069 Dresden (DE)
(74) Vertreter: Lippert, Stachow & Partner

(56) Entgegenhaltungen:
- EP-A1- 0 929 164
- US-B1- 6 233 433

## Beschreibung

Die Erfindung betrifft eine Anordnung zum Test einer Satellitenkommunikationsverbindung, mit einer Teilanordnung für einen Testbetrieb.

Die Erfindung betrifft auch ein Verfahren zum Test einer Satellitenkommunikationsverbindung, wobei in einer Betriebsart für einen Testbetrieb Testdaten über mehrere Träger übertragen werden.

Bei einer Verarbeitung von Testdatenströmen mittels Satellitenkommunikation stellt sich im Wesentlichen folgende Anforderung:
- Effiziente Durchführung von so genannten In Orbit Tests (IOTs) mit besonderem Fokus auf Messgenauigkeit, Messzeit und geringer Beeinflussung bestehender Kommunikationsverbindungen

Im Folgenden wird auf die oben angeführte Anforderung eingegangen.

### In Orbit Tests (IOT) :

Zur Wahrung von Garantieansprüchen, zur Kontrolle der vertraglich vereinbarten Leistungsparameter bzw. zum Test von Bauelementen im Raumsegment, aber auch zur Messung der Übertragungsqualität werden in regelmäßigen Abständen so genannte In Orbit Tests (IOTs) durchgeführt. Dabei werden die zu vermessenden Satellitenbauteile in der Regel aus dem Nutzbetrieb herausgenommen und mithilfe spezieller Testsignale und Messverfahren vom Boden aus vermessen. Neben den Kosten für die Messungen, welche in der Regel eine Dienstleistung Dritter ist, entstehen hierbei vor allem Umsatzausfälle, da für die Dauer der Messungen keine Gebühren für vermietete Satellitenkapazität erhoben werden können.

Gleichzeitig haben solche IOTs hohe vertragliche Relevanz, da der Satellitenhersteller seinem Kunden, typisch dem Satelliten-Serviceprovider, stets Produktqualität über den gesamten Produktlebenszyklus garantieren muss. Daraus leitet der Serviceprovider dann eine bestimmte Verfügbarkeit der Satellitenverbindung und eine Dienstgüte ab, welche er wiederum dem Endkunden im Rahmen von Service Level Agreements (SLAs) garantiert.

IOTs sind somit notwendig und unabdingbar, denn sie dienen der Feststellung des Trägers der ökonomischen Last unerfüllter SLAs. Die Qualität eines IOT-Konzeptes wird daher in erster Linie anhand der Messgenauigkeit und der notwendigen Messzeit, innerhalb der keine Nutzdaten übertragen werden können, beurteilt. Ein ideales und überlegenes Konzept erlaubt für alle relevanten Messungen die Übertragung von Nutzdaten auch während der Messung. Ferner gestattet es ein solches Konzept dem Nutzer, d.h. dem Betreiber der Kommunikationsverbindung, ohne Mitwirkung von dritter Seite selbständig und im laufenden Betrieb die geforderten Parameter zu vermessen, sodass er den Erfüllungsgrad von ihm zugesicherten SLAs direkt verifizieren kann.

### Analoge Störgrößen:

Physikalische, das heißt technische und fertigungsbedingte, Störmechanismen in den analogen Komponenten führen dazu, dass das Sende- bzw. Empfangssignal eine Vielzahl an verschiedenartigen Signalverzerrungen erfährt, hervorgerufen zum Beispiel durch Phasenrauschen, Gleichanteil, Frequenzversatz, Nichtlinearitäten, Jitter und I/Q Asymmetrie. Prinzipiell entstehen solche Störungen immer dort, wo analoge Baugruppen verwendet werden. In dem hier betrachteten Fall also in der Sendebodenstation, im Satellitentransponder und in der Empfangsbodenstation.

Zusammenfassend betrachtet können als Hauptstörquellen die Sendebodenstation und/oder der Satellit gesehen werden. Der Beitragsumfang der beiden Positionen richtete sich dabei nach der jeweiligen Auslastung der beteiligten Bodenstation und des Satelliten.

Als Quellen kann hier"Satellite Communications Systems", Gerard Maral, Wiley & Sons, 2009 sowie "RF Power Amplifiers for Wireless Communications", Steve C. Cripps, Artech House, 2006 benannt werden.

Ein weiteres Problem stellt das so genannte ASI (adjacent satellite interference) dar. Als ASI bezeichnet man den Signalanteil, den ein Satellit B von einer Bodenstation empfängt, obwohl diese Station nicht diesen Satelliten B sondern einen anderen Satelliten A ansprechen will (uplink) und auch umgekehrt (downlink). ASI ist ein Ergebnis unzureichender Antennengewinne (Strahlbündelung der Antennen) bzw. unzureichender Gewinnentkopplungen der Antennen aus Sicht des Empfängers (räumliche Trennung der Signale). ASI führt dazu, dass die Sendeleistung am Boden und am Satellitenausgang nicht beliebig erhöht werden kann, ohne fremde Satelliten bzw. fremde Bodenstationen zu stören.

Es ist leicht verständlich, dass sich beide Signalverzerrungen direkt auf die erreichbare Datenrate abbilden lassen, denn die damit einher gehenden Störungen reduzieren das Verhältnis von Nutzsignalleistung und Störsignalleistung am jeweiligen Empfänger.

Die nachfolgenden Abschnitte beschreiben den aktuellen Stand der Technik. Die aktuelle Durchführung von IOTs ist im Moment ein sehr langwieriger und zeitaufwändiger Prozess. Das liegt vor allem daran, dass das derzeitig auf dem Markt verfügbare Testequipment nicht in der Lage ist, effektive breitbandige Tests durzuführen. Zwar gäbe es die Möglichkeit, breitbandige Testsignale zu erzeugen, um die Messzeit zu verkürzen. Dem steht aber entgegen, dass die Messungen mit hoher Genauigkeit durchgeführt werden müssen, also mit einem hohen C/N (Carrier to Noise) oder SNR (signal-to-noise-ratio). Um ein sehr breitbandiges Signal mit hohem C/N zu erzeugen, müsste man breitbandig hohe Leistungen am Boden abstrahlen. Hier werden aber Grenzen von der Regulierungsbehörde (z.B. Frequenzmaske) vorgeschrieben. Zudem könnte das angestrebte Ziel, solche Messungen zeitgleich mit Nutzdatenverkehr im Transponder, damit offensichtlich nicht erreicht werden.

Momentan existieren zwei Ansätze diesem Problem zu entgegnen:
- Leistungsstarke, schmalbandige Träger
- Leistungsschwache, breitbandige Träger

### Schmalbandige Träger:

Im ersten, heute typischen, Fall generiert man ein schmalbandiges Testsignal, welches dann sukzessive von einer Testfrequenz zur nächsten verschoben wird, ähnlich eines Spektrumanalyzers. Dadurch entsteht naturgemäß eine lange Testphase, welche gleichbedeutend einer Downzeit des Satelliten ist und somit die entsprechenden wirtschaftlichen Konsequenzen nach sich zieht. Neben den offensichtlichen ökonomischen Nachteilen, sind mit diesem Ansatz auch verstärkt widersprüchliche bzw. schlecht vergleichbare Messergebnisse zu erwarten, die sich schlicht aus der zeitlichen Veränderung des Übertragungskanals während der Messungen ergeben (z.B. Wettereinflüsse). Diese Ergebnisse sind nicht falsch, verzerren aber den Blick und geben nicht die augenblicklichen Kenngrößen des Gesamtsystems wieder. Zudem werden im Allgemeinen enorme Anstrengungen unternommen, die Veränderungen im Übertragungskanal zeitgleich zu den IOTs zu vermessen und die IOT-Messergebnisse nachträglich zu kalibrieren.

Zu diesem Zweck müssen eigene technische Vorrichtungen vorgehalten werden, die mit erheblichen Investitionskosten verbunden sind. Für die überwiegende Anzahl von Betreibern von Teleports und von Kommunkationsverbindungen ist dies extrem unwirtschaftlich, weshalb IOTs heute nur von wenigen Dienstleistern mit großer Marktmacht angeboten werden.

### Breitbandiger Träger:

Neben dem sukzessiven Verschieben eines Testsignals existiert noch ein sog. Spread-Spectrum Ansatz, der einen Sinus-Träger mithilfe einer Sequenz breit aufspreizt und somit unter den (thermischen) Rauschpegel drückt. Auf diese Weise ist das Testsignal für bestehende Kommunikationsverbindungen im Träger nahezu unsichtbar, so dass diese auch während der Messungen weiter betrieben werden können. Am Boden wird nach der Entspreizung wieder ein sehr gutes C/N erreicht. Vorteil dieses Verfahrens ist, dass die Übertragung von Nutzdaten während der Messung weiter laufen kann, jedoch ist auch dieses Verfahren in Bezug auf die Messzeit nicht von Vorteil. Es wird deshalb vorwiegend für Monitoringzwecke verwendet. Zudem müssen auch für dieses Messverfahren eigene technische Vorrichtungen bereitgehalten werden, die heute ebenfalls mit sehr hohen Investitionskosten verbunden sind. Besonders aufwändig ist hierbei oft die Einspeisung des Testsignals in die bestehenden Sende- und Empfangswege der Nutzsignale, denn neben dem technischen Aufwand kommen zusätzliche Probleme der Kalibrierung hinzu. Um die eigentlichen Effekte des Satelliten von möglichen Einflüssen dieser bodenseitigen Signalwege zu separieren, müssen weitere Messungen an den Bodenstationen durchgeführt werden, die ebenfalls zu baulichen und technischen Veränderungen führen. Für viele Betreiber ist auch dies unwirtschaftlich, weshalb sie erneut die Dienstleistung bevorzugen.

Aus der US 6,233,433 B1 ist eine Anordnung und ein Verfahren für einen in Orbit Test eines Satelliten-Kommunikationssystems bekannt, bei welchem mehrere Transponder mittels einer Bodenstation getestet werden können.

Dieser dargestellte Stand der Technik basiert auf einer prinzipiell vollkommen anderen Herangehensweise, welche auch Teile der oben dargestellten Nachteile enthält.

Der Erfindung liegt die Aufgabe zugrunde ein Verfahren und eine Anordnung zum Test einer Satellitenkommunikationsverbindung anzugeben, wobei eine effiziente Durchführung von so genannten In Orbit Tests (IOTs) ermöglicht werden soll, mit besonderem Fokus auf Messgenauigkeit, Messzeit und geringer Beeinflussung bestehender Kommunikationsverbindungen.

Gemäß der Erfindung wird die Aufgabe mit einer Anordnung der eingangs genannten Art dadurch gelöst, dass die Teilanordnung einen Eingang zur Ansteuerung der Teilanordnung mittels Initialisierungsdaten aufweist, welcher mit einer Kontrollmanagement- und Multiplexing-Einheit zur Steuerung des Testbetriebs verbunden ist, dass diese mit einer nachgeschalteten Trägermanagementanordnung verbunden ist, welche mehrere Ausgänge aufweist, dass jeder Ausgang mit einer Testsequenzerzeugungseinheit zur Erzeugung einer Testsequenz je Träger verbunden ist, dass die Ausgänge aller Testsequenzerzeugungseinheiten mit einer Parallel-/Seriell-Wandleranordnung verbunden sind, welcher eine Filteranordnung nachgeschaltet ist und dass der Ausgang der Filteranordnung mit dem Ausgang der Teilanordnung verbunden ist.

Die Teilanordnung, welche einen Eingang für Steuer- oder Initialisierungsdaten aufweist, kann durch einen Computer zur Initialisierung eines Testbetriebs angesteuert werden. Das eingangsseitig angelegte Steuersignal sowie entsprechende Initialisierungsdaten werden an eine Kontrollmanagement- und Multiplexing-Einheit zur Steuerung des Testbetriebs übergeben. Mittels dieser Einheit und einer Trägermanagementeinheit zur Ansteuerung mehrerer Testsequenzerzeugungseinheiten werden mehrere parallel geschaltete Testsequenzerzeugungseinheiten angesteuert, welche für je einen Träger eine Testsequenz erzeugen. Diese Testsequenzen werden einer Parallel-/Seriell-Wandlung zugeführt und gefiltert. Das derart erzeugte Gesamttestsignal wird mittels einer Analog-/Digital-Wandlung in ein analoges Gesamttestsignal gewandelt, bevor es über einen Hochleistungsverstärker verstärkt und mittels einer Antenne abgestrahlt wird. Über die Satellitenkommunikationsverbindung erreicht das Gesamttestsignal einen Empfänger, in welchen dann eine Auswertung verschiedener Parameter der Satellitenkommunikationsverbindung erfolgt. Durch die parallele Testsequenzerzeugung wird der Zeitbedarf für einen Test aller zur Verfügung stehender Kanäle drastisch reduziert. Außerdem kann nach der Übertragung der Testsequenzen zu einer Empfangsstation der Betrieb sofort mit der Nutzdatenübertragung fortgesetzt werden, während in der Empfangsstation parallel zur Nutzdatenübertragung eine Auswertung der Übertragungsparameter "online" oder "offline" erfolgt.

Gemäß der Erfindung wird die Aufgabe verfahrensseitig dadurch gelöst, dass in der Betriebsart auf der Senderseite für jeden Träger Testdaten erzeugt, moduliert und als ein gemeinsames Sendesignal über die Satellitenkommunikationsverbindung gesendet werden und dass auf der Empfängerseite ein zugehöriges Empfängersignal empfangen und anschließend ausgewertet wird.

In der Betriebsart für den Testbetrieb erfolgt eine Erzeugung von Testdaten oder Testsequenzen für jeden einzelnen Träger separat und zeitgleich. Somit muss der laufende Betrieb, bei welchem üblicherweise Nutzdaten über die Satellitenkommunikationsverbindung übertragen werden, nur kurz zur Durchführung eines Testbetriebs für mehrere oder alle zur Verfügung stehenden Kanäle unterbrochen werden und kann nach der Übertragung der Testsequenzen und dem Empfang sowie einer Zwischenspeicherung der Empfangssequenzen in einer Empfangsstation fortgesetzt werden. Nachfolgend kann dann der Test ausgewertet werde.

In einer Gestaltung der Erfindung ist vorgesehen, dass in der Betriebsart nach dem Empfang eines zugehörigen Empfängersignals die Auswertung offline erfolgt.

Damit der laufende Betrieb, also die Übertragung von Nutzdaten über die Satellitenkommunikationsverbindungen nur kurzzeitig zur Durchführung eines Testbetriebs unterbrochen werden muss, ist vorgesehen, eine Auswertung der Empfangssequenzen des Testbetriebs parallel zu dem dann bereits wieder laufenden Betrieb durchzuführen. Hierfür ist vorgesehen, die Empfangssequenzen zwischenzuspeichern und nach der Aufnahme des laufenden Betriebs auszulesen und auszuwerten.

Die Lösung soll nachfolgend anhand eines Ausführungsbeispiels näher erläutert werden. In den zugehörigen Zeichnungen zeigt
- Fig. 1: eine Darstellung eines Leistungsdichte-Frequenz-Diagramms mit mehreren Bodenstationen und Satellitentranspondern nach dem Stand der Technik,
- Fig. 2: einen Einfluss von nichtlinearen Verzerrungen auf das Diagramm aus Fig. 1,
- Fig. 3: eine vorgeschlagene Anordnung für eine IOT-Messung,
- Fig. 4: eine Prinzipdarstellung einer Anordnung zur Satellitenkommunikation nach dem Stand der Technik,
- Fig. 5: eine Prinzipdarstellung einer erfindungsgemäßen Anordnung zur Satellitenkommunikation mit einem INRADIOS-Modem,
- Fig. 6: eine Prinzipdarstellung der Innenbeschaltung des INRADIOS-Modems und

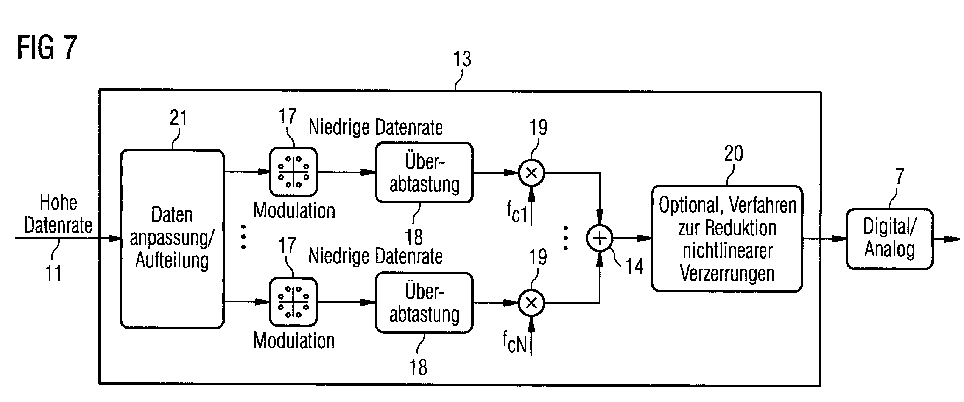

- Fig. 7: eine weitere Ausgestaltung des Modems aus Fig. 6.

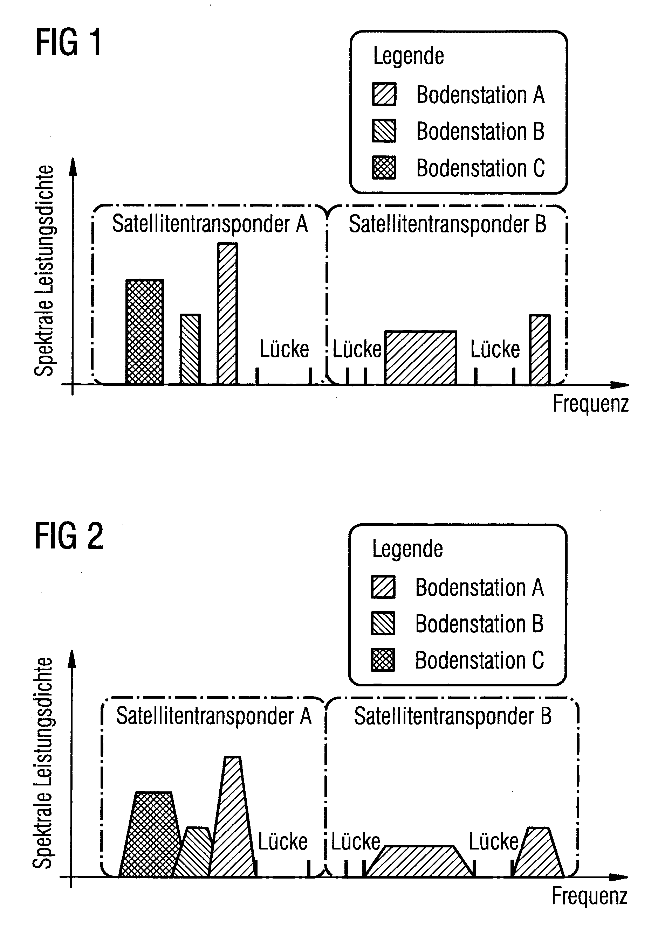

Kernlösungsansatz aller genannten Probleme ist die gleichzeitige parallele Verarbeitung von mehreren Kanälen/Frequenzbändern (auch transponderübergreifend) auf der physikalischen Schicht in einem Modem. Die Figur 1 zeigt dazu eine spektrale Leistungsdichte innerhalb eines Satellitentransponders bzw. über Transpondergrenzen hinweg. Zu erkennen sind zwei Satellitentransponder A und B sowie Signale von drei verschiedenen Bodenstationen (A, B, C), wobei von der Bodenstation A drei Frequenzbänder abgestrahlt werden während von den Stationen B und C jeweils nur ein Band gesendet wird. Weiterhin sind Lücken eingezeichnet, welche die Fragmentierung des Spektrums verdeutlichen sollen. Mit dem aktuellen Stand der Technik wird an der Senderseite jedes Frequenzband separat durch ein Modem moduliert und an der Empfängerseite wieder durch ein Modem demoduliert.

Erfolgt nun eine nichtlineare Verzerrung der Signale, sei es während der Signalverarbeitung am Boden oder im Satelliten, so entsteht im Frequenzbereich eine Reduktion der Amplitude und eine Verbreiterung der Spektren, was zu den besagten Wechselwirkungen (spektrale Überlagerungen) zwischen den Trägern führt. In der Figur 2 ist dieser Effekt schematisch dargestellt.

Für einen effizienten und wirtschaftlichen IOT werden an dieser Stelle zwei mögliche Realisierungen einer verbesserten digitalen Signalverarbeitungseinheit an der Bodenstation vorgeschlagen:
- Die Bodenstation besitzt die technologische Fähigkeit, geeignete Sequenzen (z.B. Trainings-/Korrelationssequenzen o.ä.) zu generieren und kann dann diese auf ein breitbandiges Signal modulieren. Zu beachten ist hierbei, ob eine solche Trainingssequenz unter Zugrundelegung der zulässigen abgestrahlten Leistungsdichte auch mit ausreichend C/N auswerten kann. Die von der Regulierungsbehörde maximal zulässige abgestrahlte Leistungsdichte ist aber für verschiedene Frequenzbänder unterschiedlich.
- Die Bodenstation verfolgt den Ansatz der gleichzeitigen Verarbeitung mehrerer Träger. Die Idee besteht darin, mehrere Trainingssequenzen zum IOT auf mehrere Träger aufzumodulieren und anschließend gemeinsam zu verarbeiten. Das wäre im Grenzfall dann eine Art gleichzeitiger Spektrumanalyzer über alle Frequenzen, so dass man die zu vermessenden Frequenzbänder nur einmal (kurz) belegen muss und anschließend am Boden (offline) das Ergebnis berechnet.

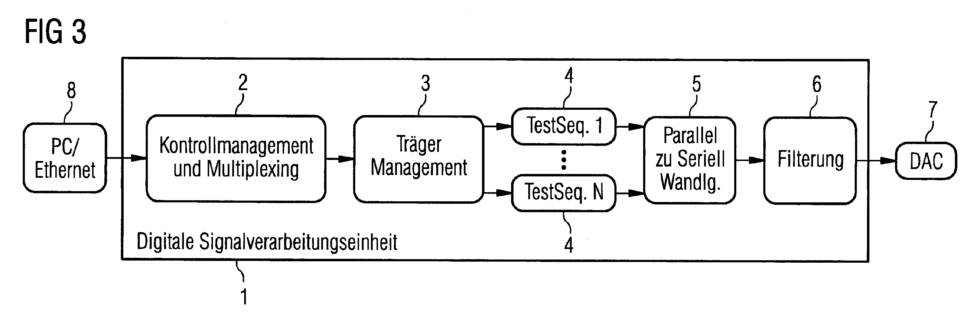

Besonders der letzte Aspekt soll hier weiter beschrieben werden, denn dieser erlaubt eine singuläre, schnelle parallele Vermessung und gleichzeitige Verarbeitung mehrerer Frequenzen/Träger. Hier liegt ein wesentlicher erfinderischer Gedanke, welcher nicht nur in der Parallelität der Verarbeitungsstrecke liegt, sondern auch in seiner Adaptivität und Agilität (benutzte Bandbreite, Trägerfrequenzen, Korrelationssequenzen usw.). Die Figur 3 zeigt hierzu einen allgemeinen schematischen Entwurf einer erfindungsgemäßen Sendeeinheit.

Über ein entsprechendes, in der Figur 3 nicht dargestelltes, Interface werden Initialisierungsdaten an die digitale Signalverarbeitungseinheit 1 übergeben. Im Beispiel werden diese Initialisierungsdaten mittels eines PC/Ethernet-Technologie 8 bereitgestellt.

Diese Initialisierungsdaten werden von einer Kontrollmanagement und Multiplexing Einheit 2 verarbeitet, welche eine nachgeschaltete Trägermanagementeinheit 3 ansteuert. Diese Trägermanagementeinheit 3 steuert die parallele, individuelle Generierung der Testsequenzen in den Testsequenzgenerierungseinheiten 4 für die unterschiedlichen Träger. Die einzelnen Träger werden in der nachgeschalteten Einheit zur Parallel-/Seriell-Wandlung 5 parallel/seriellgewandelt und in einem Filter 6 gefiltert. Die letzte Stufe der digitalen Signalverarbeitung 1 ist mit einer Einheit zur Digital-/Analog-Wandlung 7 verbunden.

An der Empfängerseite erfolgt eine äquivalente parallele/breitbandige Signalverarbeitung, deren Ergebnis eine Aussage über die zu testenden Größen liefert. Bei Bedarf kann hierzu eine aktuelle Liste der Parameter erzeugt werden.

Eine Weiterentwicklung dieser Technik ist das gleichzeitige Vermessen von mehreren Satelliten. Derzeitige, sich noch in der Startphase befindende, Forschungsprojekte beschäftigen sich mit der Fragestellung quasi Mehrantennenbetrieb (MIMO) mit verteilen Satelliten und/oder verteilten Bodenstationen zu untersuchen. Gerade beim MIMO-Betrieb ist eine exakte Kanalkenntnis von entscheidender Bedeutung. Das Durchfahren von allen Frequenzen und für alle möglichen Satelliten-zu-Boden-Kombinationen würde aber viel zu lange dauern, so dass hier eine parallele Verarbeitung zwingend notwendig ist. Die Verarbeitung würde sich dann auf die Prinzipien des Zeit-, Code-, Frequenzmultiplex beziehen.

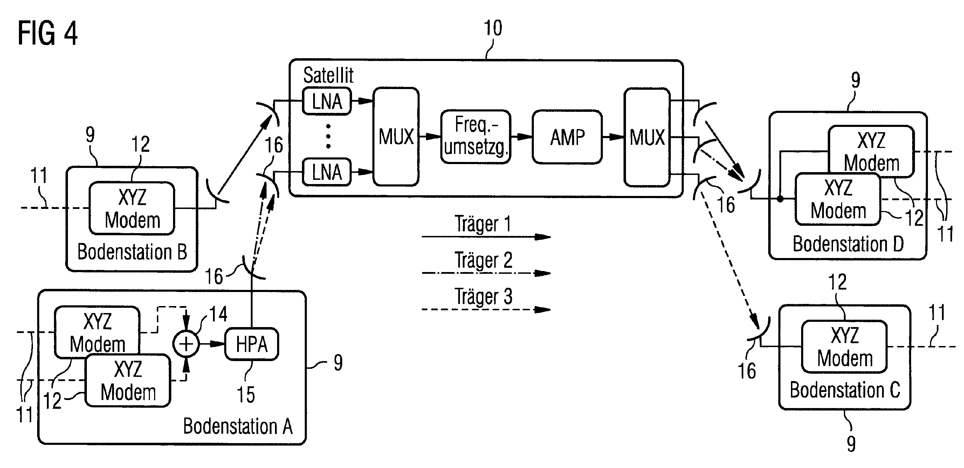

In der Figur 4 ist die aktuelle Übertragungssituation anhand einer nicht vollständigen Prinzipskizze dargestellt. Die Begriffe HPA, LNA, MUX und AMP stammen aus dem Englischen und bedeuten
- HPA (high power amplifier, Hochleistungsverstärker),
- LNA (Low Noise Amplifier, Verstärker mit geringem Rauschanteil),
- MUX (Multiplexer/Demultiplexer) und
- AMP (Amplifier, spezieller Leistungsverstärker).

In der Figur 4 sind mehrere Bodenstationen 9 und ein Satellit 10 mit ihren wesentlichen funktionalen Baugruppen dargestellt. Einzelne oder mehrere eingangsseitige Datenströme 11 werden in den Bodenstationen 9 (auf der linken Seite der Figur 4 angeordnet) verarbeitet und dann zum Satelliten 10 geschickt. Dieser setzt die Träger um und sendet sie, eventuelle auch von unterschiedlichen Antennen, wieder zurück zur Erde an die auf der rechten Seite der Figur 4 angeordneten Bodenstationen 9 oder auch umgekehrt.

Nach dem Stand der Technik sind in einer Bodenstation 9 hierfür für jeden zu verarbeitenden Datenstrom 11 je ein Modem 12 angeordnet. Diese Modems 12 sind mit ihren Ausgängen auf eine Summationsanordnung 14 zur Erzeugung eines Summen-Sendesignals aufgeschaltet. Der Ausgang der Summationsanordnung 14 ist mit einem nachgeschalteten Hochleistungsverstärker 15 verbunden, welcher das über die nachgeordnete Antenne 16 abgestrahlte Sendesignal erzeugt.

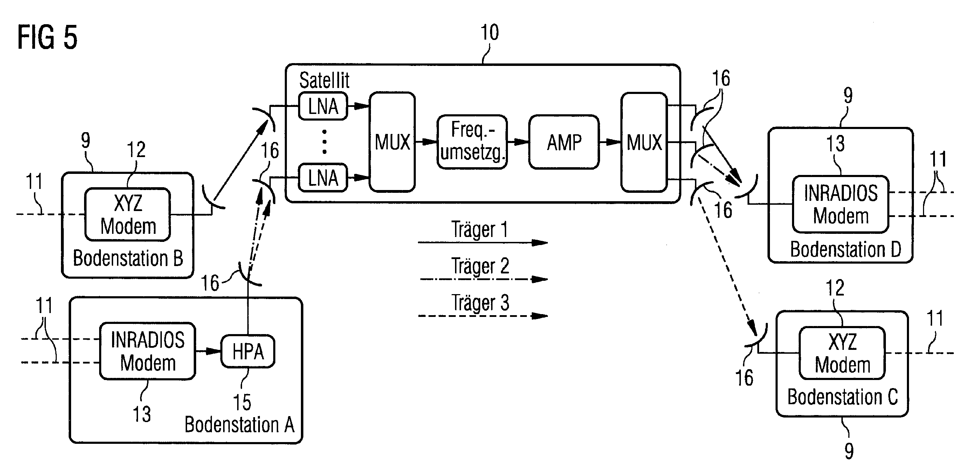

Erfindungsgemäß werden die Einzelmodems 12 in den Bodenstationen 9 durch ein INRADIOS-Modem 13 ersetzt, so dass sich eine Darstellung gemäß Figur 5 ergibt. Wie in der Figur 5 dargestellt, kann das erfindungsgemäße INRADIOS-Modem 13 mehrere Datenströme 11 verarbeiten und weist einen Ausgang für ein Summen-Sendesignal auf. Neben diesem Modem 13 können auch die aus dem Stand der Technik bekannten Modems 12 an der Kommunikation über den Satelliten 10 teilhaben, wie dargestellt.

Hierdurch ergibt sich eine Miniaturisierung und Integration von sonst einer Vielzahl von Modems in eine Produktlösung. Vorteile:
- Individuelle und einfache abstimmbare Bandbreitebelegung, Modulationsverfahren usw.
- Agile und adaptive Trägerbelegung
- Reduktion der geometrischen Abmessung und damit einhergehend Vorteile im Preis, Gewicht, Stromverbrauch usw.

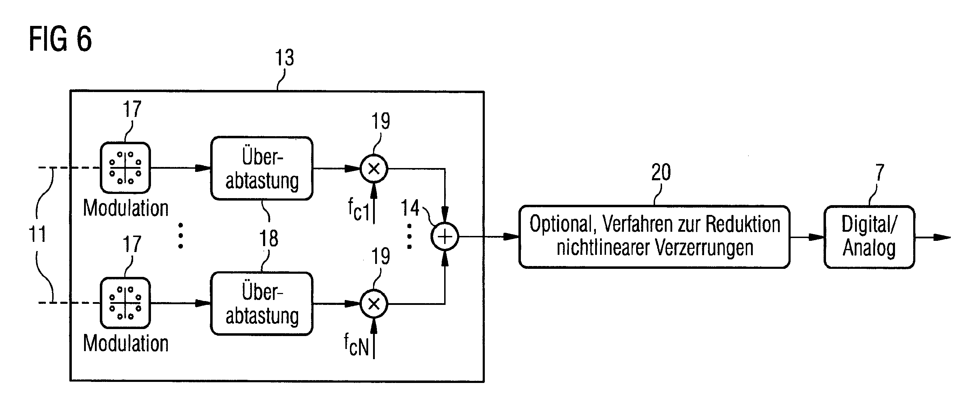

Die Abarbeitung innerhalb eines Modems 13 erfolgt dann nach dem in der Figur 6 dargestellten Schema. Hier ist auszugsweise nur der sendeseitige Modemteil dargestellt.

Die einzelnen Datenströme 11 werden innerhalb des Modems 13 in je einem Modulator 17 moduliert, und nach einer Überabtastung 18 in einer Mischstufe 19 auf ihre vorgegebene Frequenz gemischt sowie nachfolgend in einer Summationsanordnung 14 zusammengefügt.

Im Anschluss daran erfolgt optional eine Signalmanipulation in einer Anordnung zur Reduktion nichtlinearer Verzerrungen 20, um nichtlinearen Verzerrungen entgegenzuwirken.

Die Datenraten der einzelnen parallelen Datenströme können dabei unterschiedliche Wellenformen (Codierung und Modulation) aufweisen, welche durch den Nutzer vorgegeben werden. Denkbar ist auch eine softwaregestützte Planung bzw. Aufspaltung des Datenstromes durch das Modem selbst.

Die Vorteile der parallelen Verarbeitung sind nachfolgend aufgeführt:
- Die Fragmentierung des Spektrums wird signifikant reduziert.
- Die Auslastung/Fill-Rate des Satelliten kann signifikant erhöht werden und der Gesamtwirkungsgrad verbessert sich.
- Die Frequenzen können kurzfristig und adaptiv belegt werden.
- Schon existierende Träger müssen nicht oder nur kaum in ihrem Frequenz- und Leistungsslot geändert werden.
- Das Verfahren kann zusätzlich mit Verfahren zur Reduktion nichtlinearer Verzerrungen erweitert werden.
- Remotefähigkeit des Modems erlaubt eine Fernsteuerung und Fernüberwachung des Systems.

### Bezugzeichenliste

- 1: digitale Signalverarbeitungseinheit
- 2: Kontrollmanagement- und Multiplexing-Einheit
- 3: Trägermanagementeinheit
- 4: Testsequenzerzeugungseinheit
- 5: Einheit zur Parallel-/Seriell-Wandlung
- 6: Filter
- 7: Digital-/Analog-Wandlung
- 8: PC
- 9: Bodenstation
- 10: Satellit
- 11: Datenstrom
- 12: Modem
- 13: INRADIOS-Modem
- 14: Summationsanordnung
- 15: Hochleistungsverstärker
- 16: Antenne
- 17: Modulator
- 18: Abtastung
- 19: Mischstufe
- 20: Anordnung zur Reduktion nichtlinearer Verzerrungen
- 21: Datenanpassungs-/Aufteilungsstufe

## Patentansprüche

1. Anordnung zum Test einer Satellitenkommunikationsverbindung, mit einer Teilanordnung für einen Testbetrieb, **dadurch gekennzeichnet,** da s s die Teilanordnung einen Eingang zur Ansteuerung der Teilanordnung mittels Initialisierungsdaten aufweist, welcher mit einer Kontrollmanagement- und Multiplexing-Einheit(2) zur Steuerung des Testbetriebs verbunden ist, dass diese mit einer nachgeschalteten Trägermanagementanordnung (3) verbunden ist, welche mehrere Ausgänge aufweist, dass jeder Ausgang mit einer Testsequenzerzeugungseinheit (4) zur Erzeugung einer Testsequenz je Träger verbunden ist, dass die Ausgänge aller Testsequenzerzeugungseinheiten (4) mit einer Parallel-/Seriell-Wandleranordnung (5) verbunden sind, welcher eine Filteranordnung (6) nachgeschaltet ist und dass der Ausgang der Filteranordnung (6) mit dem Ausgang der Teilanordnung verbunden ist.

2. Verfahren zum Test einer Satellitenkommunikationsverbindung, wobei in einer Betriebsart für einen Testbetrieb Testdaten über mehrere Träger übertragen werden, **dadurch gekennzeichnet, dass** in der Betriebsart auf der Senderseite für jeden Träger Testdaten erzeugt, moduliert und als ein gemeinsames Sendesignal über die Satellitenkommunikationsverbindung gesendet werden und dass auf der Empfängerseite ein zugehöriges Empfängersignal empfangen und anschließend ausgewertet wird.

3. Verfahren nach Anspruch 2, **dadurch gekennzeichnet , dass** in der Betriebsart nach dem Empfang eines zugehörigen Empfängersignals die Auswertung offline erfolgt.

## Claims

1. Assembly for testing a satellite communication connection, having a subassembly for test operation, **characterized in that** the subassembly has an input for controlling the subassembly using initialization data, which input is connected to a control management and multiplexing unit (2) for controlling test operation, **in that** said unit is connected to a downstream carrier management assembly (3) which has a plurality of outputs, **in that** each output is connected to a test sequence generating unit (4) for generating a test sequence for each carrier, **in that** the outputs of all test sequence generating units (4) are connected to a parallel/serial converter arrangement (5) which has a filter arrangement (6) connected downstream of it, and **in that** the output of the filter arrangement (6) is connected to the output of the subassembly.

2. Method for testing a satellite communication connection, test data being transmitted using a plurality of carriers in an operating mode for test operation, **characterized in that**, in the operating mode, test data are generated for each carrier on the transmitter side, are modulated, and are transmitted as a common transmission signal via the satellite communication connection, and **in that** an associated receiver signal is received and then evaluated on the receiver side.

3. Method according to Claim 2, **characterized in that**, after an associated receiver signal has been received, the evaluation is carried out off-line in the operating mode.

## Revendications

1. Ensemble pour tester une liaison de communication par satellite, présentant une partie prévue pour l'exécution du test,
**caractérisé en ce que**
la partie de l'ensemble présente une entrée de commande de la partie de l'ensemble au moyen de données d'initialisation qui est reliée à une unité (2) de gestion de contrôle et de multiplexage qui commande l'exécution du test,
**en ce que** cette unité est raccordée à un ensemble (3) de gestion de support raccordé en aval et doté de plusieurs sorties,
**en ce que** chaque sortie est raccordée à une unité (4) de formation de séquences de test qui forme une séquence de test pour chaque support,
**en ce que** les sorties de toutes les unités (4) de formation de séquences de test sont raccordées à un ensemble (5) de conversion parallèle-série suivi par un ensemble de filtrage (6) et
**en ce que** la sortie de l'ensemble de filtrage (6) est raccordée à la sortie de la partie d'ensemble.

2. Procédé de test d'une liaison de communication par satellite, dans lequel, dans un mode de fonctionnement, des données de test sont transmises sur plusieurs supports pour l'exécution du test,
**caractérisé en ce que**
dans le mode de fonctionnement sur le côté émetteur, des données de test sont formées, modulées et envoyées en tant que signal émis commun sur la liaison de communication par satellite pour chaque porteur et
**en ce que** du côté réception, un signal reçu associé est reçu et ensuite évalué.

3. Procédé selon la revendication 2, **caractérisé en ce que** dans le mode de fonctionnement, l'évaluation s'effectue hors ligne après la réception d'un signal reçu associé.
